# EUROPEAN PATENT APPLICATION

(11) **EP 1 906 127 A2**
(43) Date of publication of application: **02.04.2008**
(21) Application number: 07018316.5
(22) Date of filing: 18.09.2007
(51) Int. Cl.: F28D 1/03, F28F 13/12, F28F 19/06

(54) **Corrosion resistant bi-metal charge air cooler**

(30) Priority: 29.09.2006 US 537103
(71) Applicant: International Truck Intellectual Property Company, LLC., Warrenville, IL 60555 (US)
(72) Inventor: Tolani, Nirmal M., Fort Wayne IN 46835 (US)
(74) Representative: Kuhnen & Wacker

(57) **Abstract**

A heat exchanger assembly for an automotive vehicle includes at least one tube (16) having an internal layer (30) and an external layer (28). The external layer (28) is an aluminum based material, and the internal layer (30) is a stainless steel based material. At least one turbulator (26) is disposed inside the tube (16) and is formed of a stainless steel based material.

## Description

### BACKGROUND OF THE INVENTION

The present invention relates generally to heat exchangers in ground vehicles. More specifically, the present invention relates to a lightweight Charge Air Cooler (CAC) with improved corrosion resistance needed for new/future exhaust emission compliant engines.

Automotive vehicles with internal combustion engines commonly have heat exchangers such as radiators, charge air coolers, condensers, heater cores, and evaporators to provide heat transfer for the vehicle. Generally, these types of heat exchangers employ the same thermodynamic principles to transfer heat from a fluid (liquid or gas) to another fluid, where the two fluids are physically separated, usually by metal tubing. On a vehicle, the charge air cooler is a part of the engine air intake system that uses ambient air to cool the intake air, which improves engine combustion efficiency.

A charge air cooler typically has stacks of tubes, two headers, fins and two end caps. The tubes serve as passages for air flow. Within each of the tubes are turbulators, which are heat transfer enhancement devices. The turbulators generally have an undulating shape to turbulate the flow of fluid through the tube so that heat can be transferred more effectively. The headers, the tubes, the turbulators and the fins are typically made of wrought aluminum alloys. The headers, turbulators and fins are generally made from aluminum clad with brazing alloy to form brazed joints between mating components. Conventionally, the turbulators are placed inside the tubes, and the tubes and fins are stacked together along with headers to form a core assembly. The core assembly is processed in the brazing furnace to form bonds between turbulators and the inside tube walls, fins and tube outer walls, and tubes and headers. After the core is formed, end caps are welded to the core to form the charge air cooler assembly.

The benefits of a CAC include obtaining cooler intake air, increased horsepower, lower emissions, and increased fuel mileage. The new federal regulations to reduce the vehicle emissions require very significant modification to the air intake system of the engines such as use of Exhaust Gas Recirculation (EGR). These modifications to the intake air system in many cases give rise to a highly corrosive condensate inside the charge air cooler. As a result of highly corrosive condensate, the traditional aluminum CAC is susceptible to internal, premature failure.

For increased corrosion resistance, CACs made entirely from stainless subcomponents are being considered for some commercial vehicles. The CACs made from stainless steel are much heavier and more expensive. Additionally, heavier CAC requires heavier and more expensive structures to support the CAC in the vehicle. This further increases the weight and the cost of the vehicle, and reduces the amount of weight that can be transported on the automotive vehicle. A significant increase in weight as well as increase in the cost makes the stainless steel CAC less desirable.

Thus, there is a need for a charge air cooler that is highly corrosion resistant and does not significantly increase the weight and cost.

### BRIEF SUMMARY OF THE INVENTION

The above-listed needs are met or exceeded by the present heat exchanger assembly for an automotive vehicle, which includes at least one tube having an internal layer and an external layer. The external layer is an aluminum based material, and the internal layer is a stainless steel based material. At least one turbulator is disposed inside the tube and is formed of a stainless steel based material.

A method of making a heat exchanger is provided and includes the steps of providing a sheet of stainless steel clad aluminum having a first and second end, and providing a turbulator of stainless steel based material. The stainless steel clad aluminum sheet is folded into a tube so that an interior surface of the tube is stainless steel. The turbulator is located inside the tube and the tube is sealed.

Also provided is a tube with a generally cylindrical housing having an internal layer comprising a stainless steel based material and an external layer comprising an aluminum based material. At least one turbulator is disposed inside the housing, the turbulator comprising a stainless steel based material.

### BRIEF DESCRIPTION OF THE SEVERAL VIEWS OF THE DRAWINGS

FIG. 1 is an exploded perspective view of a charge air cooler assembly according to the present invention;

FIG. 2 is a partial perspective view of a fin and a tube located in a core of the charge air cooler assembly;

FIG. 3 is a cross-sectional view of a conventional tube assembly; and

FIG. 4 is a cross-sectional view of a tube assembly of the present invention.

### DETAILED DESCRIPTION OF THE INVENTION

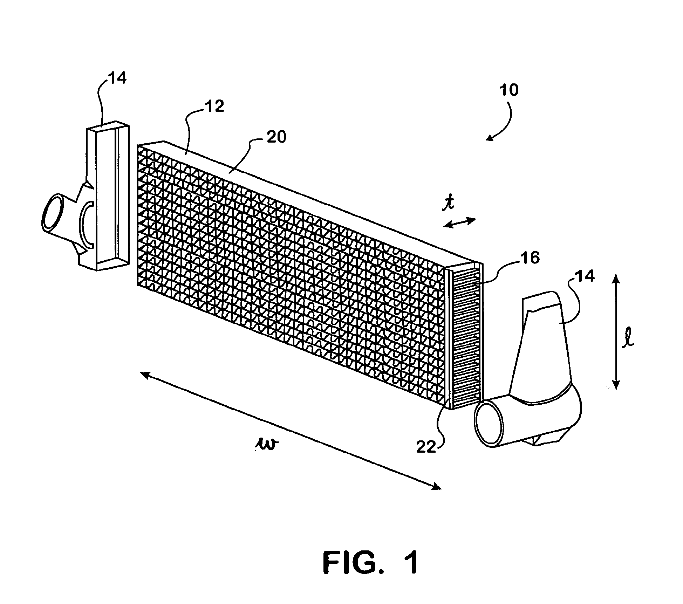

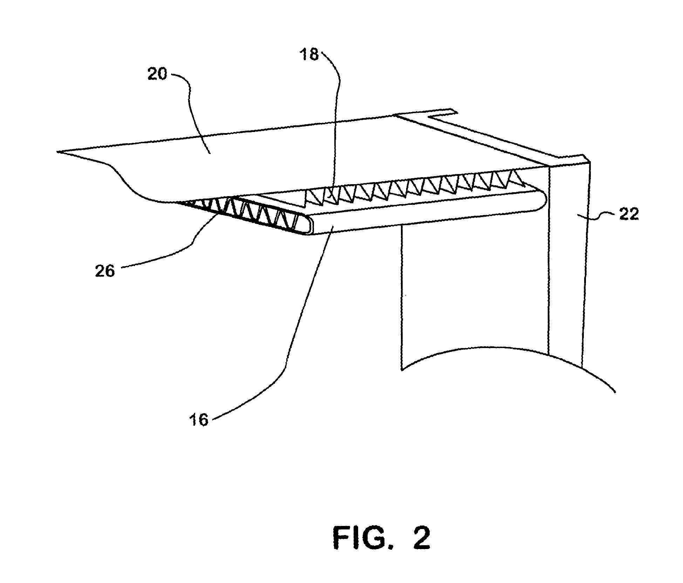

Referring now to FIGs. 1 and 2, an embodiment of a heat exchanger assembly is shown. In this example, the heat exchanger is a charge air cooler (CAC) assembly for an automotive vehicle, which is indicated generally at 10. While the present heat exchanger 10 is a charge air cooler, it is contemplated that the present invention can be used with other heat exchanger assemblies.

The charge air cooler assembly 10 includes a core assembly 12 and two end caps 14. The core assembly 12 includes a plurality of tubes 16 and fins 18. Each tube 16 preferably extends across the width "w" of the core assembly 12. Additionally, each fin 18 preferably extends along the width of the core assembly 12. Preferably bounding the periphery of the core assembly 12 are side members 20 running across the width "w" and thickness "t" of the core assembly, and header members 22 running in the longitudinal "1" direction of the core assembly. The two end caps 14 are preferably welded onto the header members 22.

As seen in FIG. 2, within each of the tubes 16 is a turbulator 26. The turbulator 26 is preferably a metal sheet having a series of waves or undulations that is configured to break up or turbulate the flow of fluid through the tube 16 to more effectively transfer heat. In the present invention, the turbulator 26 is made of a stainless steel based material.

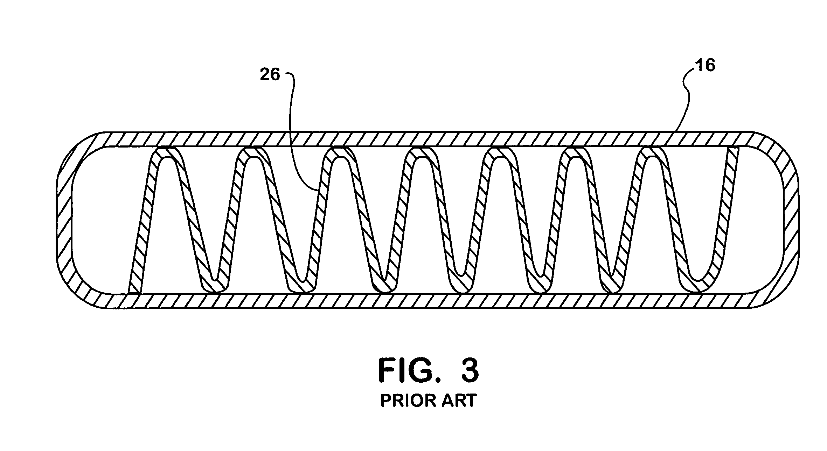

Referring now to FIG. 3, the prior art tube 16P is made from extruded aluminum and the prior art turbulator 26P is made from sheet aluminum clad with a brazing alloy. Additionally, the end caps (not shown) are formed of cast aluminum, the fins and the header (not shown) are formed of sheet aluminum clad with brazing alloy, and the sides (not shown) are formed of sheet aluminum, as is known in the art. The prior art core assembly (not shown) is generally vacuum brazed, and the cast aluminum end caps (not shown) are welded to the core headers.

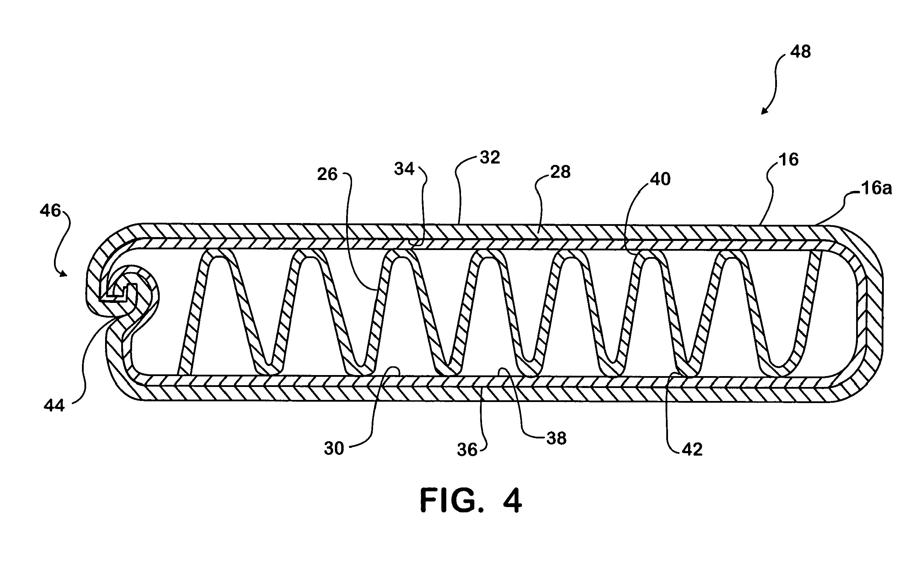

Referring to FIG. 4, a tube assembly 48 is made of a tube 16 having a housing 16A and a turbulator 26. The housing 16A has two layers, an external layer 28 and an internal layer 30. The external layer 28 of the tube 16 is preferably formed of a conventional aluminum based material, and the internal layer 30 is preferably formed of a stainless steel based material. The external layer 28 has an outer surface 32, which defines the outer surface of the tube, and an inner surface 34, contacting the internal layer 30. The internal layer 30 contacts the external layer 28 with an outer surface 36. The internal layer 30 also includes an inner surface 38.

There are over seventy standard types of stainless steel and many special alloys. Generally, all stainless steel is iron-based with 12 to 30 percent chromium (Cr), 0 to 22 percent nickel (Ni), and minor amounts of carbon, niobium, copper, molybdenum, selenium, tantalum, and titanium. Generally, the stainless steel alloys are heat and corrosion resistant, non-contaminating and easily fabricated.

Further, stainless steel alloys are generally grouped in three groups: (1) Martensitic, (2) Ferritic, and (3) Austenitic.

Preferably, the tube 16 is formed of an aluminum sheet clad with austenitic or ferritic stainless steel. The turbulators 26 are disposed inside the tube 16 and are preferably attached to the inner surface 38 of the internal layer 30. The turbulators 26 are preferably made of stainless steel, and more preferably, are made of an austenitic or a ferritic sheet stainless steel.

In this embodiment, the tube 16 is preferably made from a stainless steel clad aluminum sheet. Stainless steel clad aluminum strip coils are commercially available and generally produced by mechanically welding the aluminum sheet and the stainless steel sheet using a rolling mill, as known in the art. The stainless steel clad strip is roll formed in a traditional tube mill to form a tube 16, with the stainless steel layer forming the internal layer 30, and the aluminum forming the external layer 28. The tube 16 is formed from the strip and has a seam 44 that is either roll formed into a lock seam 46 or a braze-joined seam. Alternate methods of tube-making may be employed to make the tube 16, such as by brazing two C-channels with a lap joint. The turbulator 26 is placed inside the tube 16 and is brazed at each peak 40 and trough 42 to join the turbulator to the tube 16 using traditional stainless steel brazing processes.

Referring back to FIG. 1, the tubes 16 containing turbulators 26 can be used to make CAC core assemblies 12 using conventional methods of manufacturing. Specifically, the tube assemblies 48, along with the fins 18, can then be placed into a core assembly 12, as is conventionally known. The core assembly 12 will have highly corrosion resistant stainless steel surfaces for the air passages.

Since the header members 22 and the end caps 14 are relatively thick members compared to the tubes 16 and turbulators 26, a certain amount of corrosion of the these components can be tolerated without affecting the integrity or performance of the charge air cooler 10. For this reason, conventional materials (aluminum alloys, wrought aluminum) and processes can be used to produce the charge air cooler with the present tube assembly.

However, to further enhance the corrosion resistance of the charge air cooler 10, the header members 22 and the end caps 14 can be formed of stainless steel clad material, or with a stainless steel layer on the inside surface of the aluminum surfaces.

The advantage of using a stainless steel clad aluminum tube 16, as opposed to a tube formed completely of stainless steel, is that the interior corrosion resistance is addressed by the internal layer 30 of stainless steel, but the weight is significantly reduced since the external layer 28 is formed of aluminum. Aluminum is lighter than stainless steel and offers more efficient heat transfer due to its higher thermal conductivity. Further, since the external layer 28 is formed of aluminum, the fins 18 can also be formed of aluminum, which further reduces weight and cost.

While particular embodiments of the present CAC have been shown and described, it will be appreciated by those skilled in the art that changes and modifications may be made thereto without departing from the invention in its broader aspects and as set forth in the following claims.

## Claims

1. A heat exchanger assembly for an automotive vehicle comprising:
at least one tube having an internal layer and an external layer, said external layer comprising an aluminum based material, and said internal layer comprising a stainless steel based material.

2. The heat exchanger of claim 1 further comprising:
at least one turbulator disposed inside said tube, said turbulator comprising a stainless steel based material.

3. The heat exchanger of claim 2 wherein said at least one tube is made of a stainless steel clad aluminum strip coil.

4. The heat exchanger of claim 2 wherein said stainless steel based material comprises a steel in the austenitic or ferritic grades.

5. The heat exchanger of claim 2 wherein said tube and said turbulator are brazed together at each peak and trough of said turbulator to said interior surface of said tube.

6. The heat exchanger of claim 2 wherein said tube is roll-formed into a lock seam.

7. The heat exchanger of claim 2 further comprising a header formed of aluminum clad with brazing alloy.

8. The heat exchanger of claim 2 further comprising a header formed of aluminum clad with a stainless steel based material.

9. The heat exchanger of claim 2 further comprising at least one end cap formed of aluminum.

10. The heat exchanger of claim 2 further comprising at least one end cap formed of stainless steel.

11. The heat exchanger of claim 2 further comprising at least one end cap formed of aluminum clad with stainless steel.

12. A method of making a heat exchanger, comprising:
providing a sheet of stainless steel clad aluminum having a first and a second end;
providing a turbulator of stainless steel based material;
forming said stainless steel clad aluminum sheet into a tube so that an interior surface of said tube is stainless steel;
locating said turbulator inside said tube; and
placing said tube in a core assembly.

13. The method of claim 12 wherein said sheet is formed into said tube to form a fluid passageway by roll-forming said first and second ends of said sheet.

14. The method of claim 12 wherein said sheet comprises two C-channels brazed together to form said tube.

15. The method of claim 12 wherein said turbulator is brazed to said interior surface of said tube.

16. A tube for a heat exchanger, comprising:
a generally cylindrical housing having an internal layer comprising a stainless steel based material and an external layer comprising an aluminum based material.

17. The tube for a heat exchanger of claim 16, further comprising:
at least one turbulator disposed inside said housing, said turbulator comprising a stainless steel based material.
